# EUROPEAN PATENT SPECIFICATION

(11) **EP 1 919 727 B1**
(45) Date of publication and mention of the grant of the patent: **08.10.2014**
(21) Application number: 06776695.6
(22) Date of filing: 09.08.2006
(51) Int. Cl.: B60K 7/00, H02K 7/102, H02K 7/116, H02K 5/20, H02K 9/19, H02K 7/10, B60K 17/04

(54) **GEAR MOTOR WITH INTEGRATED BRAKE FOR DIRECT DRIVE OF AN ELECTRIC TRACTION VEHICLE WHEEL**
GETRIEBEMOTOR MIT INTEGRIERTER BREMSE ZUM DIREKTANTRIEB EINES RADS EINES FAHRZEUGS MIT ELEKTRISCHEM ANTRIEB
MOTEUR A ENGRENAGES A FREIN INTEGRE POUR UN ENTRAINEMENT DIRECT D'UNE ROUE DE VEHICULE A TRACTION ELECTRIQUE

(30) Priority: 23.08.2005 IT DO20050135
(43) Date of publication of application: 14.05.2008
(73) Proprietor: PRO-MEC S.r.l., 33030 Coseano (IT)
(72) Inventor: POZZO, Luigino, I-33030 Coseano (UD) (IT)
(74) Representative: D'Agostini, Giovanni
(86) International application number: PCT/EP2006/007861
(87) International publication number: WO 2007/022865

(56) References cited:
- EP-A1- 1 000 829
- EP-A2- 0 999 081
- DE-A1- 4 433 100
- DE-A1- 10 219 922
- DE-A1- 10 225 038
- US-A- 3 812 928

## Description

### Technical Field

This invention rotates to an gear-motor with integrated brake for direct drive to the electric-traction vehicle wheel according to the preamble of the main claim.

The electric-traction vehicle with this type of gear-motor brake is also part of this invention.

### Background Art

In the present state of the art it is well known that in the transmission of motion to the driving wheels of vehicles, particularly industrial vehicles, e.g. tractors, forklift trucks, operating machines, independent electric motors are used, one for the driving-wheel with the aid of a reducer transmission having a gear-reducing device and incorporated brake.

Document DE 102 19 922 A1 discloses an example of such a type of motor.

The current tendency leans towards the use of increasingly compact and faster engines in order to reduce the external encumbrances of the ratio-motor system as the final users require increasingly silent machines.

### Drawbacks of Present State of the Art

The following are drawbacks of the aforementioned current state of the art:
1) need to apply a connection system between the motor shaft and the entry of the gear-reducing device that causes undesired encumbrance;
2) difficulty of alignment between motor and transmission that can generate unexpected noise and the instability of the system;
3) high costs as it must provide support means for all the rotating elements:
4) poor versatility of the braking system: it is often impossible to pass from one type of system to another as the mechanical structure of the system does not allow the application of solutions different from the initial one.

### Aim of the Invention

The aim of the invention is to avoid the aforementioned drawbacks and make the system more efficient and with higher performance.

In substance, the aim is to implement an integrated system made up of a gear-reducing device, a reliable and very compact motor and brake, that is also economical and that allows the complete adaptability of different types of brakes, it allows easy access to the operative systems and in particular both to the transmission as well as to the brake for maintenance.

### Solution to the Problem and Summary of the invention

The problem is solved with the characteristics of the main claim. The sub-claims provide preferred solutions.

### Advantages

With this invention the motor is directly integrated into the transmission forming a single body with said transmission. Therefore, a strong compact solution is obtained with all the advantages of a monobloc, the casing of the motor being an integral part of the transmission as it also acts as cover for the gear casing, namely the transmission chamber. In this way, for example, by dismantling the case of the motor it opens the group in two, on one side the gear drive with complete access from the interior of the vehicle and on the other side the motor and brake are also completely and easily accessible because they can be completely detached from the vehicle by means of the simple unscrewing of a series of bolts.

Moreover, In this way all the misaligning and engaging problems are avoided that may be found during the installation of an external motor.

The motor casing incorporates one or more cavities that may be utilized as an oil reserve for the braking chamber and/or as a recirculation channel of this oil, in case all the reducer oil is to be used for cooling.

The motor shaft assumes the triple function of:
a) input gear of the transmission,
b) complete driving shaft,
c) connection for the application of the braking system, it provides the maximum functional and structural advantage of the monobloc.

In particular, more types of braking systems can be applied to the motor, in order to be provided at the opposite side to the gearing pinion for the reducer transmission with a gear-reducing device.

With this, the advantage of the possibility of adopting different types of braking to the monobloc is obtained, without for this reason having to vary the structure of the monobloc, and this therefore according to the needs of use.

With this solution a very economic and compact transmission is obtained that can reach almost absolute constructive precision limits: by obtaining the input gear directly on the motor shaft moreover it is possible to increase the reduction relations with the consequent possibility of increasing the rotation speed of the motor because of the perfect constructive form.

The system can provide or not the use of motors in an oil bath, realizing in this way a system in which the oil of the gear-reducing device re-circulates through opportune channels passing through the motor and the brake, without however passing dose to the rotor to carry out a form of generalized cooling of the system: in this way the use of security seals is avoided between motor, transmission and brake, to the advantage of mechanical efficiency.

At the free end of the motor shaft more types of brake can be applied, the most common among which are:
a1) electromagnetic brake;
a2) a positive brake or a negative and/or combined brake with oil-immersed discs;
a3) oil-immersed mechanical brake.

These and other advantages will appear from the following description of a preferred solution with the aid of the included drawings, whose details are not to be considered limitative but are only provided as an example.

### Description of Some Embodiments

The invention is now described with the aid of the enclosed drawings wherein:
- Figure 1 shows a design of the proposed solution that provides the use of an oil-immersed disc brake activated by means of a mechanical lever.
- Figure 2 shows instead a section portion of the system in which, as a realization system of the oil-immersed disc brake, a cartridge has been installed that integrates a combined system made up of a positive brake with hydraulic activation and by a negative brake with mechanical drive (by springs) and hydraulic release (SAHR).
- Figure 3 indicates a solution in which the activation of the oil-immersed disc brake is entrusted to an electromagnetic actuator.
- Figure 4 shows instead an alternative embodiment, which does not form part of the invention, with a design similar to, Figure 1, in which however the use of a dry disc is provided and therefore the recirculation channel of the oil toward the gear-reducing device has been obstructed and the brake chamber has been opened outwards.

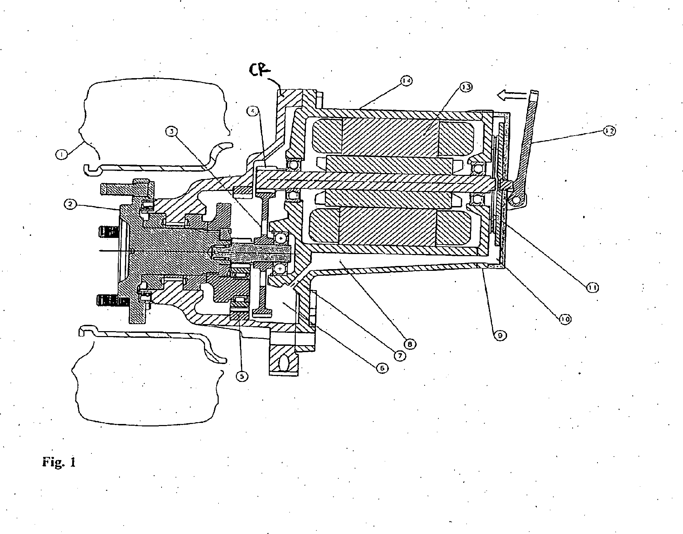

The three embodiments in Fig.1, 2, 3 can also be applied to this design.

### Detailed Description of the Figures

The driving-wheel is indicated with (1), while (2) indicates the wheel hub that receives the motion and is integrated into the gear reducer transmission by means of a satellite gear-reducing device (5) that forms the second stage of the gear-reducing device that receives the motion from the crown wheel (3) that gears directly on the pinion of the first reduction stage (4), the pinion being directly obtained on the motor shaft. Naturally, the optimal solution is that the pinion is directly obtained by the driving shaft by means of mechanical work, but it is evident that less preferable solutions could provide a keyed and bushed pinion on the end of the motor, therefore interchangeable.

All the gears of the reducer-transmission are englobed in the gear-reducing device chamber (6) that communicates with the connecting channel (7) with the additional chamber/container integrated into the fusion (8) of the electromotor casing (13).

The end shield at the opposite side to the reducer-transmission is closed by a closing flange of the motor (9) for easy access and inspection.

In a similar way, the casing of the motor casing (14) acts as cover of the reducer transmission (3-5), whose opening places in view both the reducer-transmission (3-5) on one side and the motor (13) on the other. The casing of the reducer-transmission (3-5) that also bears the connection transmission to the wheel (2) and that is screwed to the motor casing (14) is indicated with (CR).

Inside the closing flange of the motor (9) and between this and the end shield of the motor a brake chamber is formed (in Fig. 1 dish type 11) the brake being keyed to the motor shaft (4).

The lever for the mechanical working of the brake is indicated with (12) in Fig.1 and the brake chamber (10) communicates by means of said additional chamber /container (8) and duct (7) with the oil chamber of the reducer-transmission (6).

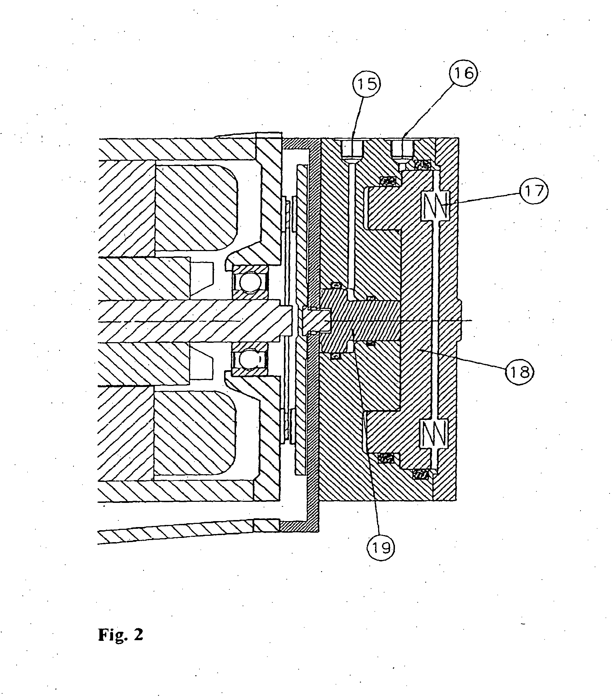

Moreover, in the Figure 2 the alternative solution of the brake is seen with a connection to the positive brake (15) and a connection to the negative brake (16), associated to the negative brake operating springs (17), the negative brake piston (18) and the positive brake piston (19).

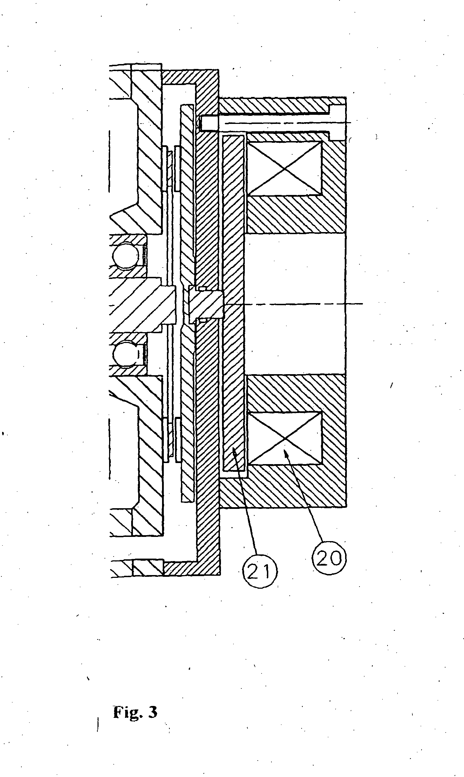

In the solution in Figure 3 the coil of the electromagnetic actuator is seen (20), with the operating anchor of the electromagnetic system for the dry disc (21).

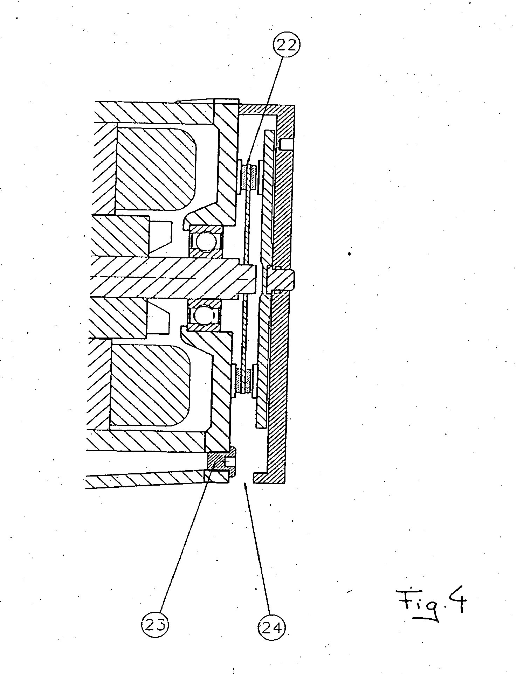

In the embodiment of figure 4, which does not form part of the invention, the closing means of the recirculation channel (23) can be seen, while the jaw clamping system of the disc of the keyed brake on the motor shaft is indicated by (22).

With the motor of the invention it is possible to obtain any of the following combinations:
a) oil-immersed transmission-gear reducing device (reducer transmission), dry motor and dry brake;
b) oil-immersed transmission-gear reducing device with dry motor and oil-immersed brake;
c) oil-immersed transmission-gear reducing device with oil-immersed motor and dry brake;
d) oil-immersed transmission-gear reducing device (reducer transmission) with oil-immersed motor and oil-immersed brake.

While the form of apparatus described herein constitutes a preferred embodiment of this invention, it is to be understood that the invention is not limited to this precise form of apparatus and that changes may be made without departing from the scope of the invention, which is defined in the appended claims.

In the drawings the numbers indicate the entities described below:
1) wheel
2) wheel hub
3) crown of the first reduction stage of the transmission
4) pinion of the first reduction stage, directly obtained on the motor shaft
5) second reduction stage of the transmission
6) reducer chamber
7) connecting channel
8) additional chamber/container integrated in the fusion
9) closing flange of the motor
10) disc brake chamber
11) brake clutch disc, connected to the motor shaft
12) lever for mechanical working of the brake
13) electromotor
14) cover of the gear-reducing device (reducer transmission), that integrates the motor casing
15) connection to the positive brake
16) connection to the negative brake
17) negative brake operating springs
18) negative brake piston
19) positive brake piston
20) coil of the electromagnetic actuator
21) operating anchor of the electromagnetic system
22) flat disc
23) closing means of the recirculation channel
24) free outward opening
25) opening for oil recirculation across the motor CR) reducer control casing and wheel axle support (2)

## Claims

1. Gear-motor with integrated brake for direct drive to the electric-traction vehicle wheel wherein:
- the traction motor (13) is integrated with a reducer transmission (3, 4, 5) connectable (2) to the driving-wheel (1), and wherein said traction motor (13) includes a shaft (4) that:
- on the wheel side (1) includes a pinion that internally gears in an integrated reducer-transmission (3,5) for the traction motion to the wheel (1, 2) in the respective gear chamber (6) and
- on the other side opposite the wheel (1) is keyed to a braking system (11) also integrated and cased (9) with the group, in the respective opposite braking chamber (10) forming a detachable motor-brake group and wherein:
the reducer transmission (3, 4, 5) is housed in a structural support casing (CR) connectable to the vehicle,
the motor has its own motor casing (14) that is fixed as a cover to said structural support casing (CR) covering the reducer transmission (3, 4, 5) for locking or allowing free access on opening;
**characterised in that**:
- said two gear (6) and brake (10) chambers are intercommunicating (7, 8) by means of an additional chamber integrated into the moulded wall of the motor casing (14).

2. Gear-motor with brake according to previous claim, **characterised in that** said motor casing (14) forming a cover for the container of said reducer-transmission (3, 4, 5) is frontally open to allow assembly with said support casing (CR) containing said reducer transmission, the connection of the respective pinion of the shaft with a first ratchet wheel (3) of said reducer transmission (3-5).

3. Gear-motor with brake according to any of the previous claims, **characterised in that** said reducer transmission, includes said pinion of the shaft (4) that gears with a coaxial ratchet wheel with the wheel (2) forming a first reduction ratio and in which the axis of said wheel involves a pinion that gears with satellite wheel/s of a toothed crown planetary reducer transmission (5) forming a second reduction ratio coaxial to the first and to the said wheel axle (2) and connecting to the driving-wheel (1) by means of a respective wheel hub keying (2) coaxially supported by the same gear case (CR).

4. Gear-motor with brake according to any of the previous claims, **characterised in that** the end shield at the opposite side to the reducer-transmission (3, 4, 5) is dosed by a closing flange of the motor (9) to house the braking system (11).

5. Gear-motor with brake according to any of the previous claims, **characterised in that** the braking system is of the disc type (11) keyed to said driving shaft and placed coaxially to said driving shaft at the opposite side of said pinion.

6. Gear-motor with brake according to any of the previous claims, **characterised in that** said disc type braking system (11) provides a second degree control lever (12) with connecting peg to the clamping disc coaxial to said driving shaft.

7. Gear-motor with brake according to any of claims from 1 to 6,
**characterised in that** the braking system includes a combined system comprising a positive brake with hydraulic activation and a negative brake with spring activated mechanical drive and hydraulic release including a connection to the positive brake (15) and a connection to the negative brake (16), associated to the negative brake operating springs (17), the negative brake piston (18) and the positive brake piston (19).

8. Gear-motor with brake according to any of claims from 1 to 6, **characterised in that** the said braking system includes an electromagnetic actuator coil (20), with an operating anchor for actuating the electromagnetic system to operate said dry braking disc (21).

9. Gear-motor with brake according to any of the previous claims **characterised in that** the respective brake opposite said reducer-transmission is demountable and interchangeable with an oil or dry type brake.

10. Gear-motor with brake according to any of claims 1-9 **characterised in that** said traction motor (13) is in an oil bath associated to the same oil bath of the reducer transmission (3, 4, 5).

11. Gear-motor with brake according to the previous claim **characterised in that** the entire system of said traction motor (13) of the reducer transmission (3,4,5) and brake (11) is in an oil bath.

12. Electric-traction vehicle comprising at least one traction gear-motor with brake directly connected to the driving-wheel according to the characteristics of any of the previous claims.

## Patentansprüche

1. Getriebemotor mit integrierter Bremse für Direktantrieb auf das Rad eines Fahrzeugs mit elektrischem Antrieb, wobei:
- der Fahrzeugmotor (13) ein Untersetzungsgetriebe (3, 4, 5) auf weist, das mit dem Antriebsrad (1) verbindbar (2) ist, und wobei besagter Fahrzeugmotor (13) eine Welle (4) umfasst, die:
- an der Radseite (1) ein Ritzel umfasst, das innen in ein integriertes Untersetzungsgetriebe (3,5) eingreift, zwecks Zugbewegung auf das Rad (1, 2) in der betreffenden Getriebekammer (6), und
- an der anderen Seite, gegenüber dem Rad (1), mit einem Bremssystem (11) verkeilt ist, das ebenfalls Teil der Gruppe und mit ihr im selben Gehäuse (9) ist, in der betreffenden gegenüberliegenden Bremskammer (10), die eine entfernbare Motorbremsengruppe bildet, wobei:
- das Untersetzungsgetriebe (3, 4, 5) in einem strukturellen Traggehäuse (CR) untergebracht ist, das mit dem Fahrzeug verbindbar ist,
- der Motor sein eigenes Motorgehäuse (14) hat, das als Abdeckung an dem strukturellen Traggehäuse (CR) befestigt ist und das Untersetzungsgetriebe (3, 4, 5) zum Verschluss abdeckt oder beim Öffnen freien Zugang gestattet; **gekennzeichnet dadurch dass**:
- die Getriebe- (6) und die Bremskammer (10) miteinander verbunden (7, 8) sind, und zwar durch eine zusätzliche Kammer in der geformten Wand des Motorgehäuses (14).

2. Getriebemotor mit Bremse nach dem vorherigen Anspruch, **gekennzeichnet dadurch, dass** besagtes Motorgehäuse (14), das eine Abdeckung für den Behälter des Untersetzungsgetriebes (3, 4, 5) bildet, vorn offen ist, zwecks Montage des Traggehäuses (CR), das das Untersetzungsgetriebe enthält, an die Verbindung des betreffenden Ritzels der Welle mit einem ersten Sperrrad (3) des Untersetzungsgetriebes (3, 4, 5).

3. Getriebemotor mit Bremse nach einem beliebigen der vorherigen Patentansprüche, **gekennzeichnet dadurch, dass** das Untersetzungsgetriebe das Ritzel der Welle (4) umfasst, dass in ein koaxiales Sperrrad eingreift, wobei das Rad (2) eine erste Getriebeuntersetzung bildet, und wobei die Achse des Rades ein Ritzel umfasst, das in ein Satellitenrad oder Satellitenräder eines planetarischen Untersetzungsgetriebes mit Zahnkrone (5) eingreift, das eine zweite Getriebeuntersetzung bildet, die koaxial zu der ersten und zu der Radachse (2) ist und mit dem Antriebsrad (1) mittels einer Radnabenverkeilung (2) verbunden ist, die koaxial vom Getriebegehäuse (CR) getragen wird.

4. Getriebemotor mit Bremse nach einem beliebigen der vorherigen Patentansprüche, **gekennzeichnet dadurch, dass** das Lagerschild an der dem Untersetzungsgetriebe gegenüberliegenden Seite (3, 4, 5) von einem Schließflansch des Motors (9) geschlossen wird, um das Bremssystem (11) aufzunehmen.

5. Getriebemotor mit Bremse nach einem beliebigen der vorherigen Patentansprüche, **gekennzeichnet dadurch, dass** das Bremssystem nach Art einer Scheibe (11) mit der Antriebswelle verkeilt ist und koaxial zur Antriebswelle an der gegenüberliegenden Seite des Ritzels.

6. Getriebemotor mit Bremse nach einem beliebigen der vorherigen Patentansprüche, **gekennzeichnet dadurch, dass** besagtes Scheibenbremssystem (11) einen Steuerhebel zweiten Grades (12) mit Verbindungsstift zur Klemmscheibe koaxial zur Antriebswelle umfasst.

7. Getriebemotor mit Bremse nach einem beliebigen der Ansprüche von 1 bis 6, **gekennzeichnet dadurch, dass** das Bremssystem ein Mischsystem mit einer positiven Bremse mit hydraulischer Aktivierung und einer negativen Bremse mit federbetätigtem mechanischem Antrieb und hydraulischem Lösen ist, einschließlich einer Verbindung mit der positiven Bremse (15) und einer Verbindung mit der negativen Bremse (16), verbunden mit den Federn der negativen Bremse (17), dem Kolben der negativen Bremse (18) und dem Kolben der positiven Bremse (19).

8. Getriebemotor mit Bremse nach einem beliebigen der Ansprüche von 1 bis 6, **gekennzeichnet dadurch, dass** das besagte Bremssystem eine elektromagnetische Betätigungsspule (20) umfasst, mit einem Anker zur Betätigung des elektromagnetischen Systems, um besagte trockene Bremsscheibe (21) zu betreiben.

9. Getriebemotor mit Bremse nach einem beliebigen der vorherigen Patentansprüche, **gekennzeichnet dadurch, dass** die Bremse gegenüber dem Untersetzungsgetriebe demontierbar und durch eine Öl- oder Trockenbremse ersetzbar ist.

10. Getriebemotor mit Bremse nach einem beliebigen der Ansprüche 1-9, **gekennzeichnet dadurch, dass** der Fahrzeugmotor (13) in einem Ölbad liegt, das mit dem Ölbad des Untersetzungsgetriebes (3, 4, 5) verbunden ist.

11. Getriebemotor mit Bremse nach dem vorherigen Anspruch, **gekennzeichnet dadurch, dass** das gesamte System des Fahrzeugmotors (13) des Untersetzungsgetriebes (3, 4, 5) und der Bremse (11) in einem Ölbad liegt.

12. Fahrzeug mit elektrischem Antrieb mit mindestens einem Getriebe-Traktionsmotor, dessen Bremse direkt mit dem Antriebsrad verbunden ist, gemäß den Merkmalen jedes beliebigen der vorherigen Patentansprüche.

## Revendications

1. Moteur à engrenages avec frein intégré pour l'entraînement direct de la roue d'un véhicule à traction électrique où:
- le moteur de traction (13) a une réducteur (3, 4, 5) connectable (2) à la roue de commande (1), et où ledit moteur de traction (13) inclut un arbre (4) qui:
- du côté de la roue (1) inclut un pignon qui engrène internement dans un réducteur intégré (3, 5) pour le mouvement de traction vers la roue (1,2) dans la respective chambre d'engrenage (6) et
- de l'autre côté en face de la roue (1) est clavettée à un système de freinage (11) également intégré et enfermé (9) avec le groupe, dans la respective chambre de freinage opposée (10) formant un groupe frein de moteur détachable et où:
- le réducteur (3, 4, 5) est logé dans un boîtier de support structurel (CR) connectable au véhicule,
- le moteur a son carter (14) qui est fixé comme une couverture audit boîtier de support structurel (CR) recouvrant le réducteur (3, 4, 5) pour le blocage ou permettant le libre accès à l'ouverture;
**caractérisé en ce que**:
- lesdites deux chambres d'engrenage (6) et du frein (10) intercommuniquent (7, 8) au moyen d'une chambre additionnelle intégrée dans la paroi moulée du carter (14).

2. Moteur à engrenages avec frein conformément à la revendication précédente, **caractérisé en ce que** ledit carter (14) qui forme une couverture pour le récipient dudit réducteur (3, 4, 5) est ouvert frontalement pour permettre le montage dudit boîtier de support (CR) contenant ledit réducteur avec la connexion du pignon respectif de l'arbre avec une première roue à rochet (3) dudit réducteur (3,4,5).

3. Moteur à engrenages avec frein selon l'une quelconque des revendications précédentes, **caractérisé en ce que** ledit réducteur inclut ledit pignon de l'arbre (4) qui engrène avec une roue à rochet coaxiale avec la roue (2) formant un premier rapport de réduction et où l'axe de ladite roue implique un pignon qui engrène avec une ou plusieurs roues satellites d'un réducteur planétaire à couronne dentée (5) formant un deuxième rapport de réduction coaxial au premier et audit axe de roue (2) et lié à la roue d'entraînement (1) au moyen d'un calage de moyeu de roue respectif (2) supporté coaxialement par la caisse d'engrenage (CR).

4. Moteur à engrenages avec frein selon l'une quelconque des revendications précédentes, **caractérisé en ce que** le bouclier d'extrémité du côté opposé au réducteur (3, 4, 5) est fermé par une bride de fermeture du moteur (9) pour contenir le système de freinage (11).

5. Moteur à engrenages avec frein selon l'une quelconque des revendications précédentes, **caractérisé en ce que** le système de freinage est du type à disque (11) clavettée audit arbre de transmission et placée coaxialement audit arbre de transmission du côté opposé audit pignon.

6. Moteur à engrenages avec frein selon l'une quelconque des revendications précédentes, **caractérisé en ce que** ledit système de freinage de type à disque (11) prévoit un levier de commande de deuxième degré (12) avec cheville de connexion au disque de serrage coaxial audit arbre de transmission.

7. Moteur à engrenages avec frein selon l'une quelconque des revendications de 1 à 6, **caractérisé en ce que** le système de freinage inclut un système combiné comprenant un frein positif avec activation hydraulique et un frein négatif avec entraînement mécanique actionné par ressort et déblocage hydraulique comprenant une connexion au frein positif (15) et une connexion au frein négatif (16), associés aux ressorts du frein négatif (17), au piston du frein négatif (18) et au piston du frein positif (19).

8. Moteur à engrenages avec frein selon l'une quelconque des revendications de 1 à 6, **caractérisé en ce que** ledit système de freinage inclut une bobine d'actionnement électromagnétique (20), avec un ancre pour actionner le système électromagnétique pour activer ledit disque de freinage sec (21).

9. Moteur à engrenages avec frein selon l'une quelconque des revendications précédentes **caractérisé en ce que** le respectif frein opposé audit réducteur est démontable et interchangeable avec un frein à sec ou à huile.

10. Moteur à engrenages avec frein selon l'une quelconque des revendications 1-9 **caractérisé en ce que** ledit moteur de traction (13) est dans un bain d'huile associé au bain d'huile du réducteur (3, 4, 5).

11. Moteur à engrenages avec frein conformément à la revendication précédente **caractérisé en ce que** l'entier système dudit moteur de traction (13) du réducteur (3, 4, 5) et frein (11) est dans un bain d'huile.

12. Véhicule à traction électrique comprenant au moins un moteur de traction à engrenages avec frein directement connecté à la roue d'entraînement conformément aux caractéristiques d'une quelconque des revendications précédentes.
